(19) Europäisches Patentamt
European Patent Office
Office européen des brevets

(11) **EP 3 531 224 A1**

(12) **EUROPEAN PATENT APPLICATION**

(43) Date of publication:
**28.08.2019 Bulletin 2019/35**

(51) Int Cl.:
**G05D 1/10** (2006.01)  **B64C 39/02** (2006.01)

(21) Application number: **19154633.2**

(22) Date of filing: **30.01.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2018 US 201815895900**

(71) Applicant: **Honeywell International Inc.
Morris Plains, NJ New Jersey 07950 (US)**

(72) Inventors:
• **HUANG, Jinming
Morris Plains, NJ New Jersey 07950 (US)**

• **STEWART, Andrew
Morris Plains, NJ New Jersey 07950 (US)**
• **CHEN, Zhong
Morris Plains, NJ New Jersey 07950 (US)**
• **VENKATARAMAN, Vijay
Morris Plains, NJ New Jersey 07950 (US)**

(74) Representative: **Houghton, Mark Phillip
Patent Outsourcing Limited
Cornerhouse
1 King Street
Bakewell
Derbyshire DE45 1DZ (GB)**

(54) **ENVIRONMENT-ADAPTIVE SENSE AND AVOID SYSTEM FOR UNMANNED VEHICLES**

(57)    A sense and avoid (SAA) module of a vehicle may receive a signal indicating a value of an environmental parameter. Additionally, the SAA system determines, based on the value of the environmental parameter, confidences value for a first and a second sensor group. The SAA system is configurable to determine a depth of an object based on signals from the first sensor group and is also configurable to determine the depth of the object based on signals from the second sensor group. The SAA system may determine, based on the depth of the object determined based on the signals from the first sensor group, the confidence value for the first sensor group, the depth of the object determined based on the signals from the second sensor group, and the confidence value for the second sensor group, a final 3-dimensional position of the object.

```
┌─────────────────────────────────────────────────┐ 500
│  RECEIVE SIGNAL INDICATING VALUE OF ENVIRONMENT  │
│                   PARAMETER                      │
└─────────────────────────────────────────────────┘
                       │
                       ▼
┌─────────────────────────────────────────────────┐ 502
│  DETERMINE, BASED ON VALUE OF ENVIRONMENTAL      │
│  PARAMETER, CONFIDENCE VALUE FOR FIRST SENSOR    │
│  GROUP AND CONFIDENCE VALUE FOR SECOND SENSOR    │
│                   GROUP                          │
└─────────────────────────────────────────────────┘
                       │
                       ▼
┌─────────────────────────────────────────────────┐ 504
│  DETERMINE, BASED ON DEPTH OF OBJECT AS          │
│  DETERMINED BASED ON SIGNALS FROM FIRST SENSOR   │
│  GROUP, CONFIDENCE VALUE FOR FIRST SENSOR GROUP, │
│  DEPTH OF OBJECT DETERMINED BASED ON SIGNALS     │
│  FROM SECOND SENSOR GROUP, AND CONFIDENCE VALUE  │
│  FOR SECOND SENSOR GROUP, FINAL 3-DIMENSIONAL    │
│  POSITION OF OBJECT                              │
└─────────────────────────────────────────────────┘
                       │
                       ▼
┌─────────────────────────────────────────────────┐ 506
│  TAKE, BASED ON FINAL 3-DIMENSIONAL POSITION OF  │
│  OBJECT, ONE OR MORE ACTIONS TO AVOID OBJECT     │
└─────────────────────────────────────────────────┘
```

**FIG. 5**

**Description**

**TECHNICAL FIELD**

This disclosure relates to unmanned vehicles.

**BACKGROUND**

Sense and avoid (SAA) systems are used in unmanned vehicles, such as unmanned aerial vehicles (UAVs), to detect the positions of objects, such as people, trees, buildings, and other vehicles. The SAA system of an unmanned vehicle may use information regarding the positions of objects to avoid colliding with the objects. The SAA system may use signals from various types of sensors to determine the position of objects. For instance, a SAA system may: (i) identify whether there is an object (e.g., including determining the size of and motion characteristics of the object); (ii) determine the orientation of the object; and (iii) determine how to avoid the object. There are mainly three SAA solutions available in the UAV market. These solutions include ultrasonic-based SAA systems, time-of-flight (TOF)-based SAA systems, and stereo vision-based SAA systems.

**SUMMARY**

In general, this disclosure relates to techniques for improving sense and avoid (SAA) systems for unmanned vehicles. For example, this disclosure describes techniques for adapting, based on values of one or more environmental parameters, how a SAA system of an unmanned vehicle determines the positions of objects. In an example where the unmanned vehicle may have a plurality of sensor groups, the SAA system may individually use signals from each of the sensor or sensor groups to determine the position of an object. However, the signals from particular sensor groups may be better at determining the position of an object in particular environmental conditions compared to other individual sensors or sensor groups. For instance, an SAA system may estimate the position of an object more accurately using signals from a binocular pair of cameras than from a LIDAR system in brightly lit environments. Accordingly, the SAA system may differently weigh the positions of the object as determined by the different sensor groups according to a confidence value that relates to certain environmental parameters.

In one example, this disclosure describes a method for a vehicle to sense and avoid objects, the method comprising: receiving, by a SAA system of a vehicle, a signal indicating a value of an environmental parameter, the environmental parameter being a measure of an environmental condition within a field of view of the vehicle; determining, by the SAA system, based on the value of the environmental parameter, a confidence value for a first sensor group and a confidence value for a second sensor group, wherein the vehicle has a plurality of sensors, the first sensor group is a group of one or more of the sensors of the vehicle, the second sensor group is a different group of one or more of the sensors of the vehicle, and the SAA system is configurable to determine a depth of an object based on signals from the first sensor group and is also configurable to determine the depth of the object based on signals from the second sensor group; determining, by the SAA system, based on the depth of the object determined based on the signals from the first sensor group, the confidence value for the first sensor group, the depth of the object determined based on the signals from the second sensor group, and the confidence value for the second sensor group, a final 3-dimensional position of the object; and taking, by the vehicle, based on the final 3-dimensional position of the object, one or more actions to avoid the object.

In another example, this disclosure describes a system comprising: one or more processors configured to provide a sense and avoid (SAA) system for a vehicle, the SAA system configured to: receive a signal indicating a value of an environmental parameter, the environmental parameter being a measure of an environmental condition within a field of view of the vehicle; determine, based on the value of the environmental parameter, a confidence value for a first sensor group and a confidence value for a second sensor group, wherein the vehicle has a plurality of sensors, the first sensor group is a group of one or more of the sensors of the vehicle and a second sensor group is a different group of one or more of the sensors of the vehicle, and the SAA system is configurable to determine a depth of an object based on signals from the first sensor group and is also configurable to determine the depth of the object based on signals from the second sensor group; determine, based on the depth of the object determined based on the signals from the first sensor group, the confidence value for the first sensor group, the depth of the object determined based on the signals from the second sensor group, and the confidence value for the second sensor group, a final 3-dimensional position of the object; and take one or more actions, based on the final 3-dimensional position of the object, to help the vehicle avoid the object.

In another example, this disclosure describes a non-transitory computer readable data storage medium having instructions stored thereon that, when executed, cause a sense and avoid (SAA) system of a vehicle to: receive a signal indicating a value of an environmental parameter, the environmental parameter being a measure of an environmental condition within a field of view of the vehicle; determine, based on the value of the environmental parameter, a confidence value for a first sensor group and a confidence value for a second sensor group, wherein the vehicle has a plurality of sensors, the first sensor group is a group of one or more of the sensors of the vehicle, the second sensor group is a different group of one or more of the sensors of the vehicle, and the SAA system is configurable to determine a depth of an object based on signals from the first sensor group and is also configurable to determine the depth of the object based on signals from the second sensor group; determine, based on the depth of the object determined based on the signals from the first sensor group, the confidence value for the first sensor group, the depth of the object determined based on the signals from the second sensor group, and the confidence value for the second sensor group, a final 3-dimensional position of the object; and take, based on the final 3-dimensional position of the object, one or more actions to avoid the object.

The details of one or more examples of the disclosure are set forth in the accompanying drawings and the description below. Other features, objects, and advantages will be apparent from the description, drawings, and claims.

**BRIEF DESCRIPTION OF THE DRAWINGS**

FIG. 1 is a block diagram of an example vehicle configured to implement the techniques of this disclosure.
FIG. 2 is a block diagram illustrating a set of example components of the vehicle, in accordance with one or more techniques of this disclosure.
FIG. 3 is a conceptual diagram illustrating a technique for determining a 3-dimensional position of an object using a pair of cameras.
FIG. 4 is a block diagram illustrating an example sense and avoid (SAA) system in accordance with a technique of this disclosure.
FIG. 5 is a flowchart illustrating an example operation of a SAA module of the vehicle, in accordance with one or more techniques of this disclosure.
FIG. 6 is a flowchart illustrating an example process for sensor selection for intelligent object depth measurement, in accordance with a technique of this disclosure.
FIG. 7 is a flowchart illustrating an example process for object depth measurement optimization, in accordance with a technique of this disclosure.

**DETAILED DESCRIPTION**

A sense and avoid (SAA) system of a vehicle is designed to sense the positions of objects and if the objects interfere with a flightpath of the vehicle, determine how to avoid colliding with the objects. Various SAA systems use signals from different types of sensors to determine the positions of objects. For instance, the SAA system may use signals from a pair of binocular cameras to determine the position of an object and the SAA system may also use a time-of-flight (TOF)-based system, such as a LIDAR system, to determine the position of the same object. However, each set of sensors may have their own strengths and limitations. For instance, a TOF-based SAA system may be susceptible to sunlight interference and the detection field of view may be limited. A TOF-based SAA system may also require very precise, and typically expensive, time measurement units, which may consume considerable electrical energy. A SAA system that uses monocular vision plus structured light may also be susceptible to sunlight interference. SAA systems that use binocular vision may not work well under complicated background or weak lighting conditions due to noise interference and the rate of successful stereo matching may be low, which may result in low accuracy for the depth estimations, and thus, low accuracy for distance estimations or location estimations based on the depth estimations. Existing SAA systems using one of the above-mentioned SAA methods do not adapt to changing environments with high accuracy, which may result in poor SAA performance.

To address such problems, this disclosure describes a SAA system that is adaptable to different environmental conditions. This SAA system may process signals from multiple sensors and group the sensors together for improved depth measurements based on preprocessed environmental information. This may result in more accurate object perception for stereo matching by ranking sensor groups in terms of accuracy of depth measurements and may improve SAA capabilities for vehicles, such as small UAVs. For instance, in some example the SAA system may use a ranking-level mechanism to determine whether to initiate use of a structured infrared (IR) light projector and may adjust the structure pattern on request of the SAA system to avoid unnecessary power consumption from the structured IR light projector.

A SAA system that is able to adapt to changing environmental conditions may improve SAA performance. In some examples, being able to adapt to changing environmental conditions may: a) enhance the robustness of a SAA system against environmental interference; b) improve the sensing accuracy by determining the best sensor or sensors to use in a particular situation; and c) trigger sensors to work on demand to reduce power consumption.

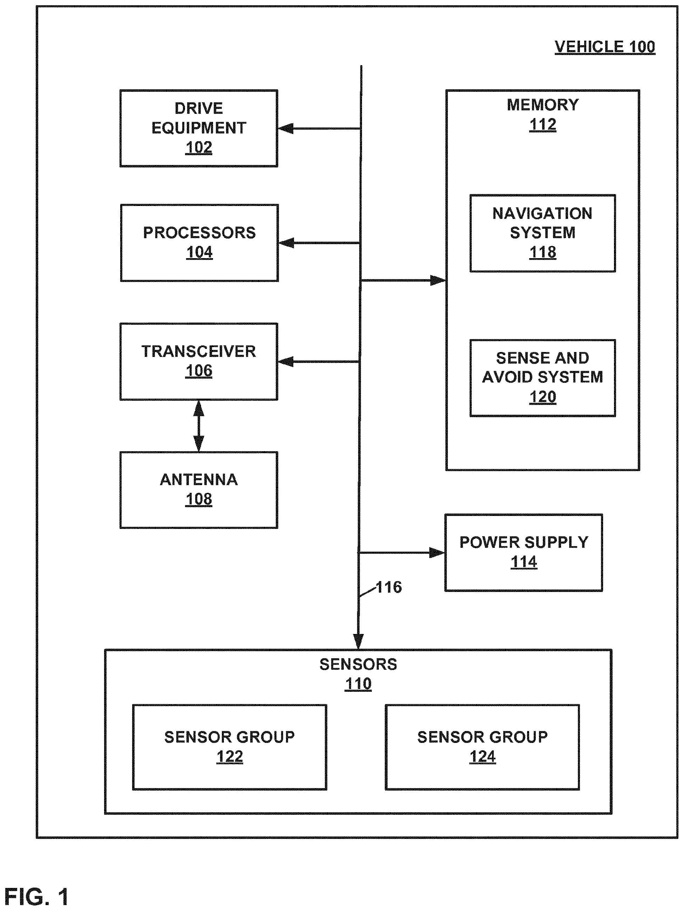

FIG. 1 is a block diagram of an example vehicle 100 configured to implement the techniques of this disclosure. Vehicle 100 may be various types of the vehicles, such as an Unmanned Aerial Vehicle (UAV), an autonomous or semi-autonomous manned aerial vehicle, a ground vehicle, a watercraft, or a spacecraft. In examples where vehicle 100 is a UAV, the UAV may be any type of UAV including, but not limited to, a quadcopter, a rotorcraft, a fixed wing aircraft, compound aircraft such as tilt-rotor, X2 and X3, an aerostat, or any other such type of UAV including all vertical take-off and landing (VTOL), tail-sitter, etc. The UAV may be configured to fly with various degrees of autonomy. In some examples, the UAV is under the constant, or near constant, control of a user of a controller device. In other examples, a controller device may deliver a mission, including a flight plan, to the UAV, and onboard processing circuitry of the UAV may be configured to execute the mission, with little or no additional user input. The UAV may, for example, be a relatively small, low altitude, and low-speed UAV, where in this context, small corresponds to under 100 lbs, low altitude corresponds to operating altitudes less than 3000 feet above ground, and low air speed corresponds to air speeds less than 250 knots. In some examples, the UAV has hovering capabilities, meaning the UAV may have the capability of remaining at an approximately constant location in the air.

In the example of FIG. 1, vehicle 100 includes drive equipment 102, one or more processors 104, a transceiver 106, an antenna 108, sensors 110, a memory 112, and a power supply 114. Communication channels 116 may interconnect each of drive equipment 102, processors 104, transceiver 106, antenna 108, sensors 110, memory 112, and power supply 114 for inter-component communications (physically, communicatively, and/or operatively). In some examples, communication channels 116 include a system bus, a network connection, an inter-process communication data structure, or any other method for communicating data, including various types of wireless communication technologies. In the example of FIG. 1, memory 112 stores instructions for a navigation system 180 and a sense and avoid (SAA) system 120. Power supply 316 may provide electrical energy to each of the other components of vehicle 100. In some examples, power supply 114 is a battery.

Drive equipment 102 is intended to represent all components for moving vehicle 100. For instance, in examples where vehicle 100 is an aerial vehicle, drive equipment 102 may comprise engines, propellers, jet engines, rotors, motors, and so on. In examples where vehicle 100 is a land vehicle, drive equipment 102 may include motors, engines, wheels, and so on. In examples where vehicle 100 is a spacecraft, drive equipment 102 may include maneuvering thrusters.

Processors 104 are intended to represent all processing circuitry and all processing capabilities of vehicle 100. Processors 104 may, for example, include one or more digital signal processors (DSPs), general purpose microprocessors, integrated circuits (ICs) or a set of ICs (e.g., a chip set), application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein.

Memory 112 is intended to represent all of the various memory devices within vehicle 100. Memory 112 constitutes one or more non-transitory computer-readable storage media and may take the form of either a volatile memory that does not maintain stored contents once vehicle 100 is turned off or a non-volatile memory that stores contents for longer periods of time, including periods of time when vehicle 100 is an unpowered state. Examples of volatile memories include random access memories (RAM), dynamic random access memories (DRAM), static random access memories (SRAM), integrated random access memory (IRAM), thyristor random access memory (TRAM), zero-capacitor random access memory (ZRAM), or any other type of suitable volatile memory. Examples of non-volatile memory include optical disk drives, magnetic disk drives, flash memory, read only memory (ROM), forms of electrically programmable memories (EPROM) or electrically erasable and programmable memories (EEPROM), or any other such type of non-volatile memory.

The functionality of vehicle 100 is implemented by hardware, software, firmware, or combinations thereof. Memory 112 may store software and firmware that include sets of instructions, such as instructions for navigation system 118 and SAA system 120. Processors 104 and, other hardware components of vehicle 100, may execute the instructions to perform the techniques of this disclosure. Thus, vehicle 100 is an example of a system comprising one or more processors configured to provide an SAA system. Other example systems comprising one or more processors configured to provide an SAA system may include a chipset, a System on a Chip (Soc), a circuit board, and so on.

Transceiver 106 is configured to send and receive data using antenna 108. Transceiver 106 may send and receive data according to any of the wireless communication protocols described elsewhere in this disclosure. For example, transceiver 106 may be configured to receive navigation instructions. Additionally, transceiver 106 may be configured to send images and other data to a computing system, such as a controller device, a mobile device, or another type of computing device.

Navigation system 118 controls a travel path of vehicle 100. For example, navigation system 118 may output signals to drive equipment 102 to instruct vehicle 100 to maneuver (e.g., fly, drive, sail, steam, etc.) to particular locations, to land, or to otherwise navigate to locations along a travel path of vehicle 100. In instances where vehicle 100 is an aerial vehicle, the travel path is or comprises a flight path.

A wide variety of sensors 110 may be include in vehicle 100. For example, sensors 110 may include one or more cameras, temperature sensors, light sensors, radiation sensors, air humidity sensors, optical flow sensors, acoustic sensors, and so on. Each of sensors 110 generates a respective signal. This disclosure may also refer to the signal generated by a sensor as a "channel." Different types of sensors may generate different types of signals. For example, the signal generated by a camera may include image data. In this example, the signal generated by a structured light sensor may indicate time-of-flight measurements with information indicating associated beam directions.

One or more of sensors 110 are configured to generate signals from which SAA system 120 may determine a value of an environmental parameter. The environmental parameter is a measure of an environmental condition in a field of view of vehicle 100. For example, an environmental parameter may be a level of light arriving at a light sensor of vehicle 100. In this example, the light sensor may be directional (e.g., to generate a signal indicating a level of light arriving at the sensor from a particular direction or range of directions) or general (e.g., to generate a signal indicating an overall level of ambient light arriving at the sensor). In another example, the environmental parameter may be an air humidity level as detected by an air humidity sensor of vehicle 100. In other example, the environmental parameters may include a contrast ratio between an object and its background.

SAA system 120 groups sensors 110 into different groups of sensors (i.e., sensor groups). In some examples, sensors 110 include one or more sensors that are not included in any sensor group. In the example of FIG. 1, sensors 110 include one or more sensors in a sensor group 122 (i.e., a first sensor group) and a sensor group 124 (i.e., a second sensor group). Sensors 110 may include one or more additional sensor groups. SAA system 120 may use signals generated by the sensors in a sensor group to determine a 3-dimensional location of an object. For example, SAA system 120 may use signals generated by sensors in sensor group 122 to determine a 3-dimensional location of an object. In this example, SAA system 120 may separately use signals generated by sensor group 124 to determine the 3-dimensional location of the object (e.g., without using signals from any of the sensors in sensor group 122). In some examples, two or more of the sensor groups share one or more of sensors 110, or share none of sensors 110, but no two sensor groups include the exact same set of sensors 110.

For instance, in one example, sensor group 122 may include two or more cameras and sensor group 124 may include a structured light detector. The cameras may be configured to detect light in various wavelengths. For instance, the cameras may detect one or more of infrared light, visible light, or ultraviolet light. SAA system 120 may use binocular pairs of images (i.e., signals) generated by the cameras to determine a 3-dimensional position of an object shown in the images. A structured light projector may emit pulses of structured light and the structured light detector may reflections of the structured light off objects. In this example, the structured light projector and detector may be part of a LIDAR system.

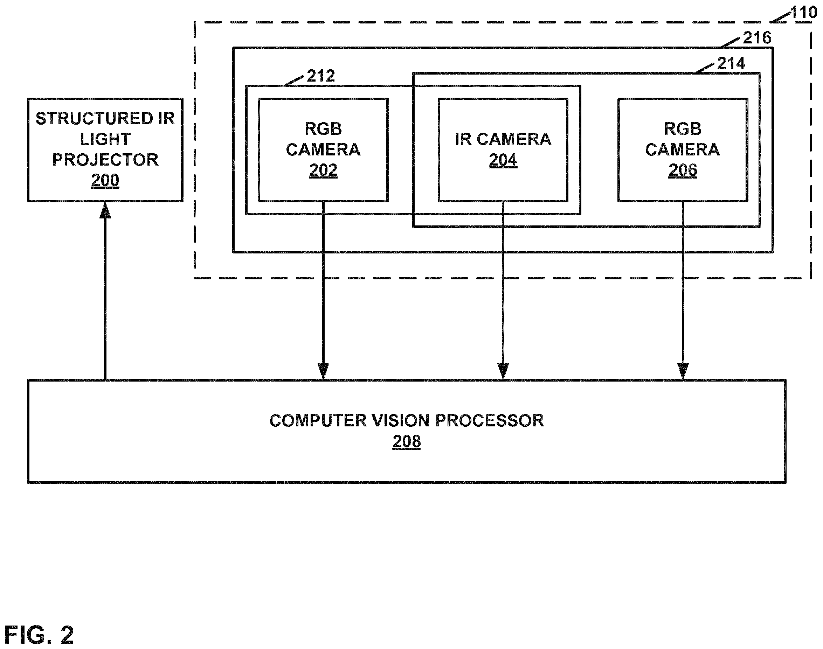

FIG. 2 is a block diagram illustrating a set of example components of vehicle 100, in accordance with one or more techniques of this disclosure. In the example of FIG. 2, vehicle 100 includes a structured infrared (IR) light projector 200. Additionally, in the example of FIG. 2, sensors 110 of vehicle 100 include a first Red-Green-Blue (RGB) camera 202, an infrared (IR) camera 204, and a second RGB camera 206. A computer vision processor 208 receives signals from RGB camera 202, IR camera 204, and RGB camera 206. It should be noted that this sensor setup is just one possible combination, and the techniques of this disclosure are adaptable to multiple different configurations of sensors.

In some examples, computer vision processor 208 comprises special-purpose hardware for determining the depths and/or positions of objects based on the signals from sensors 110. For instance, computer vision processor 208 may comprise an embedded processor. In other examples, computer vision processor 208 comprises general-purpose hardware. In some examples, SAA system 120 uses data from computer vision processor 208, or physically includes computer vision processor 208. Computer vision processor 208 may be one of processors 104 (FIG. 1).

In some examples, computer vision processor 208 uses signals from sensors 110 to determine values of environmental parameters. For example, computer vision processor 208 may collect video streams from RGB camera 202 and RGB camera 206 and preprocess the imagery in the video streams by determining value of environmental parameters, such as a brightness, a contrast ratio, or the visibility of a region.

In the example of FIG. 2, a first sensor group 212 includes RGB camera 202 and IR camera 204. A second sensor group 214 includes IR camera 204 and RGB camera 206. A third sensor group 216 includes RGB camera 202, IR camera 204, and RGB camera 206. Thus, computer vision processor 208 may determine a position of the object based on signals from sensor group 212, determine a position of the object based on signals from sensor group 214, and determine a position of the object based on signals from sensor group 216. Because of the differing characteristics and capabilities of the sensor groups, computer vision processor 208 may determine different positions of the same object for the same time. For instance, if sensor group 212 is ill-suited for a particular environment, the position determined based on the signals from sensor group 212 are likely to be inaccurate. However, if sensor group 216 is well-suited for the particular environment, the position determined based on the signals from sensor group 216 are more likely to be accurate.

In some examples, when a value of an environmental parameter (e.g., brightness, contrast ratio, etc.) is higher (or lower) than a pre-defined threshold, SAA system 120 prioritizes signals from RGB cameras 202 and 206 as primary channels to extract depth information to be used for object detection and obstacle avoidance. When a value of an environmental parameter (e.g., brightness, contrast ratio, etc.) is less than (or greater than) a defined threshold, SAA system 120 may trigger a structured IR light projector to project structured pulses of IR light and group each RGB camera (i.e., RGB camera 202 and RGB camera 206) with IR camera 204 to form two separate depth images (i.e., depth image 1 and depth image 2). SAA system 120 may then associate depth image 1 and depth image 2 by depth sorting. In other words, SAA system 120 may rectify depth image 1 and depth image 2 for horizontal alignment. Depth sorting may facilitate stereo matching for object information with better accuracy. Thus, FIG. 2 is an example illustration of triple (RGB, RGB, IR) camera integration through self-grouping based on environmental condition.

Stereo matching is a process that generates a depth picture (i.e., a depth map). The stereo matching process takes two pictures as input. The two pictures are captured at the same time by two cameras. Each pixel of a depth picture indicates a depth of an object represented in part by the pixel. To generate the depth map in the stereo matching process, computer vision processor 208 may rectify the pictures to align horizontal lines in the pictures. Then, for each row of pixels in a first of the rectified pictures, computer vision processor 208 slides a window along the row. The window may include a set of pixels in the row. For each position of the window, computer vision processor 208 may determine, in a corresponding row of the second rectified picture, a set of pixels that best matches pixels in the window of the first rectified picture. Computer vision processor 208 then determines a distance between the first pixel of the window and the first pixel of the identified set of pixels of the second rectified picture. Computer vision processor 208 may use the distance as the value of a pixel of the depth picture corresponding to the first pixel of the window.

To quantify how likely it is that SAA system 120 will be able to accurately determine a position of an object using signals from a sensor group when certain environmental conditions are present, SAA system 120 may determine, based on values of one or more environmental parameters, a confidence value for the sensor group. In different examples, SAA system 120 may determine the confidence value for a sensor group in different ways. For example, SAA system 120 may use a predetermined lookup table for the sensor group that maps values of one or more environmental parameters to confidence values. In this example, there may be different predetermined lookup tables for different sensor groups such that for the same values of environmental parameters, SAA system 120 may determine different confidence values for different sensor groups. In other examples, SAA system 120 may use a function for a sensor group that takes values of one or more environmental parameters as variables.

In some examples, to determine the lookup table or function for a sensor group, SAA system 120 may determine, based on signals from the sensor group generated when a set of one or more environmental parameters have particular values, a set of 3-dimensional positions of a stationary object or an object moving along a known path. Additionally, SAA system 120 may determine whether the set of 3-dimensional positions are consistent with the actual position of the object. The less likely the determined set of 3-dimensional positions are to correspond to the actual position of the object, the lower the confidence value is for sensor group given the values of the set of environmental parameters. Conversely, if the determined set of 3-dimensional positions closely correspond to the actual position of the object, SAA system 120 determines a higher confidence value for the sensor group, given the values of the set of environmental parameters. For instance, SAA system 120 may determine a confidence value as an inverse of a mean squared error of the determined 3-dimensional positions of the objects. In this example, instead of determining the full 3-dimensional position, a similar example may simply determine the depth of the object, with the depth of the object directly correlating to a distance between the object and vehicle 100. SAA system 120 may repeat this process for various values of the environmental parameters. Furthermore, the process of determining confidence values does not necessarily need to be done by SAA system 120, but rather may be determined separately from vehicle 100 altogether by, for example, transmitting data or other information collected by sensors 110 to a processing device (e.g., a computer) that is separate from vehicle 100.

In another example, SAA system 120 may determine, based on signals from sensors in a sensor group when the environmental parameters have particular values, an optical flow for an object that describes an apparent motion of the object in a visual scene caused by the relative motion between the object and the scene. The more consistent the actual known motion of the object is with the optical flow of the object, as determined based on the signals from the sensors in the sensor group when the environmental parameters have the particular values, the higher the confidence values for the sensor group for the values of the environmental parameters. Conversely, low consistency may be correlated with low confidence values. SAA system 120 may repeat this process for various values of the environmental parameters.

After determining the confidence values for the sensor groups, SAA system 120 may determine a final 3-dimensional position of the object. In some examples, to determine the final 3-dimensional position of the object, SAA system 120 may determine 3-dimensional positions of the object based on signals from each of the sensor groups. SAA system 120 may then determine an average of the determined 3-dimensional positions, weighted based on the confidence values of the sensor groups. For instance, SAA system 120 may determine:

$$X_f = X_1 \cdot w_1 + X_2 \cdot w_2 + \ldots$$

$$Y_f = Y_1 \cdot w_1 + Y_2 \cdot w_2 + \ldots$$

$$Z_f = Z_1 \cdot w_1 + Z_2 \cdot w_2 + \ldots$$

In the equations above, $X_f$ is the x coordinate of the final 3-dimensional position of the object, $X_1$ is the x coordinate of the 3-dimensional position of the object as determined by SAA system 120 based on signals from a first sensor group, $w_1$ is a weight based on the confidence value for the first sensor group, $X_2$ is the x coordinate of the 3-dimensional position of the object as determined by SAA system 120 based on signals from a second sensor group, $w_2$ is a weight based on the confidence value for the first sensor group, $Y_f$ is the y coordinate of the final 3-dimensional position of the object, $Y_1$ is the y coordinate of the 3-dimensional position of the object as determined by SAA system 120 based on signals from the first sensor group, $Y_2$ is the y coordinate of the 3-dimensional position of the object as determined by SAA system 120 based on signals from the second sensor group, $Z_f$ is the z coordinate of the final 3-dimensional position of the object, $Z_1$ is the z coordinate of the 3-dimensional position of the object as determined by SAA system 120 based on signals from the first sensor group, and $Z_2$ is the z coordinate of the 3-dimensional position of the object as determined by SAA system 120 based on signals from the second sensor group. In some examples, the coordinates are relative to vehicle 100 or a point on vehicle 100. In some examples, the coordinates are relative to a point separate from vehicle 100. In some examples, SAA system 120 determines the weights by scaling the confidence values such that the resulting weights sum to 1.

In some examples, to determine a final 3-dimensional position of an object, SAA system 120 may determine, based on signals from each sensor group in a plurality of sensor groups, a plurality of depth values of an object. In this example, SAA system 120 may then determine a final depth value as an average of the depth values, weighted according to the confidence values of the sensor groups. SAA system 120 may determine the weights based on the confidence values in the same manner as in the previous example. Furthermore, in this example, SAA system 120 may then determine, based on a position of the object as shown in an image from one of the sensors and the final depth value, the final 3-dimensional position of the object.

Thus, some examples, SAA system 120 may receive a signal indicating a value of an environmental parameter. Additionally, SAA system 120 may determine, based on the value of the environmental parameter, a confidence value for a first sensor group and a confidence value for a second sensor group. As noted above, vehicle 100 has a plurality of sensors 110. In this example, the first sensor group is a group of one or more of sensors 110 of vehicle 100 and the second sensor group is a different group of one or more of sensors 110 of vehicle 100. In this example, SAA system 120 is configurable to determine a depth of an object based on signals from the first sensor group and is also configurable to determine a depth of an object based on the signals from the second sensor group. Furthermore, in this example, SAA system 120 determines, based on a depth of an object determined based on signals from the first sensor group, the confidence value for the first sensor group, a depth of the object determined based on signals from the second sensor group, and the confidence value for the second sensor group, a final 3-dimensional position of the object. In this example, vehicle 100 may take, based on the final 3-dimensional position of the object, one or more actions to avoid the object. In other words, vehicle 100 may maneuver, based on the final 3-dimensional position of the object, vehicle 100 to avoid the object

When certain environmental conditions are present, some sensor groups may be significantly less useful in determining locations of objects. For example, a sensor group consisting of RGB camera 202 and RGB camera 206 may be substantially less useful in determining the locations of objects when vehicle 100 is operating in complete darkness. Accordingly, when vehicle 100 is operating in complete darkness, the confidence value for this sensor group may be below a minimum confidence threshold for the sensor group. The minimum confidence threshold for the sensor group may be specific to the sensor group and different sensor groups may have different minimum confidence thresholds. In other examples, each sensor group has the same minimum confidence threshold. To conserve energy, SAA system 120 may disable one or more sensors in a sensor group if the confidence level for the sensor group is below the minimum confidence threshold for the sensor group. When a sensor is disabled, the sensor may stop generating a signal that represents a feature of the environment (e.g., light) detected by the sensor.

Thus, in one example, SAA system 120 may receive a signal indicating a value of an environmental parameter. In this example, SAA system 120 determines, based on the second value of the environmental parameter, a confidence value for a first sensor group (e.g., sensor group 122) and a confidence value for a second sensor group (e.g., sensor group 124). In this example, based on the confidence value for the first sensor group being below a first threshold, SAA system 120 may disable the first sensor group and may determine, without using any signals from the first sensor group, a 3-dimensional position of an object. Similarly, in this example, based on the confidence value for the second sensor group being below a second threshold, SAA system 120 may disable the second sensor group and may determine, without using any signals from the second sensor group, the 3-dimensional position of the object.

Furthermore, in some examples, when certain environmental conditions exist, the ability of SAA system 120 to accurately determine a depth of an object based on signals from a first sensor group may be sufficient such that it may be a waste of resources to continue use of signals from the second sensor group, even if SAA system 120 could still use the signals from the second sensor group to determine a depth of the object. For example, in a well-lit environment, it may be unnecessary to continue using structured light projector 200 because the SAA system 120 may be able to determine the depths and locations of objects with sufficient accuracy based on signals from sensor group 216. Thus, if the confidence value for a first sensor group is above a particular confidence threshold for the first sensor group, SAA system 120 may disable a second sensor group. The confidence thresholds for different sensor groups may be the same or different.

Thus, in one example, SAA system 120 may receive a signal indicating a value of an environmental parameter. In this example, SAA system 120 may determine, based on the second value of the environmental parameter, a confidence value for a first sensor group

(e.g., sensor group 122) and a confidence value for a second sensor group (e.g., sensor group 124). Furthermore, in this example, based on the confidence value for the first sensor group being above a first threshold, SAA system 120 may disable the second sensor group and determine, based on signals from the first sensor group and without using any signals from the second sensor group, a 3-dimensional position of an object. Similarly, in this example, based on the confidence value for the second sensor group being above a second threshold, SAA system 120 may disable the first sensor group and determine, based on second signals from the second sensor group and without using any signals from the first sensor group, the 3-dimensional position of the second object.

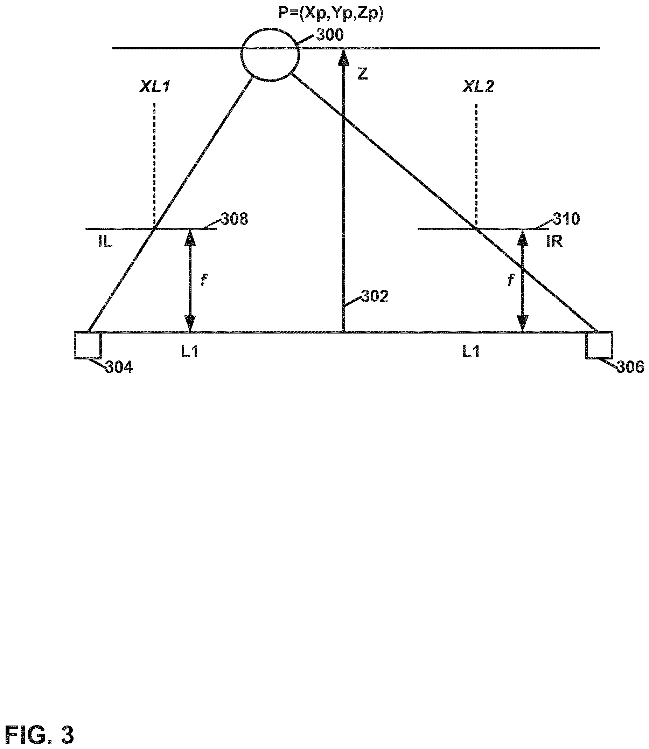

FIG. 3 is a conceptual diagram illustrating a technique for determining a 3-dimensional position of an object 300 using a pair of cameras. In the example of FIG. 3, the 3-dimensional position of object 300 is denoted as P(Xp,Yp,Zp). In some examples, Xp, Yp, and Zp indicate distances from vehicle 100 in particular dimensions. In the example of FIG. 3, midline 302 indicates a midpoint between cameras 304 and 306. *L1* indicates a distance from midline 302 to camera 304 and camera 306. Furthermore, in the example of FIG. 3, *f* indicates the focal lengths of cameras 304 and 306. *XL1* indicates an x-coordinate of object 300 in a picture 308 captured by camera 304. In FIG. 3, *IL* indicates image left (i.e., the image captured by the left camera 304); IR indicates image right (i.e., the image captured by right camera 306). *XL2* indicates an x-coordinate of object 300 in a picture 310 captured by camera 306. Z indicates a depth of object 300.

In the example of FIG. 3, SAA system 120 may determine a depth of an object, such as object 300, using the following equations:

$$d = XL1 - XL2 = f\left(\frac{Xp+L}{Zp} - \frac{Xp-L}{Zp}\right) = \frac{fB}{Zp} \qquad \text{Equation (1)}$$

$$Zp = \frac{fB}{d} \qquad \text{Equation (2)}$$

In Equation (1), above, d denotes the stereo vision differential value (i.e., the difference between the x-coordinates of the object as seen by the two cameras), *XL1* indicates the x-coordinate of the object in an image captured by the first camera, *XL2* indicates the x-coordinate of the object in an image captured by the second camera, the actual x-coordinate of the object is denoted in Equation (1) as *Xp, L* indicates one half of the distance between the two cameras, *f* indicates the focal length of the cameras, and *B* indicates the full distance between the cameras. Thus, as shown in Equation (2), the actual z-coordinate of the object (i.e., *Zp)* may be determined by dividing *fB* by *d.* For the reasons discussed above, the value d may be subject to error from noise and changes in the environment of vehicle 100, such as changes in lighting.

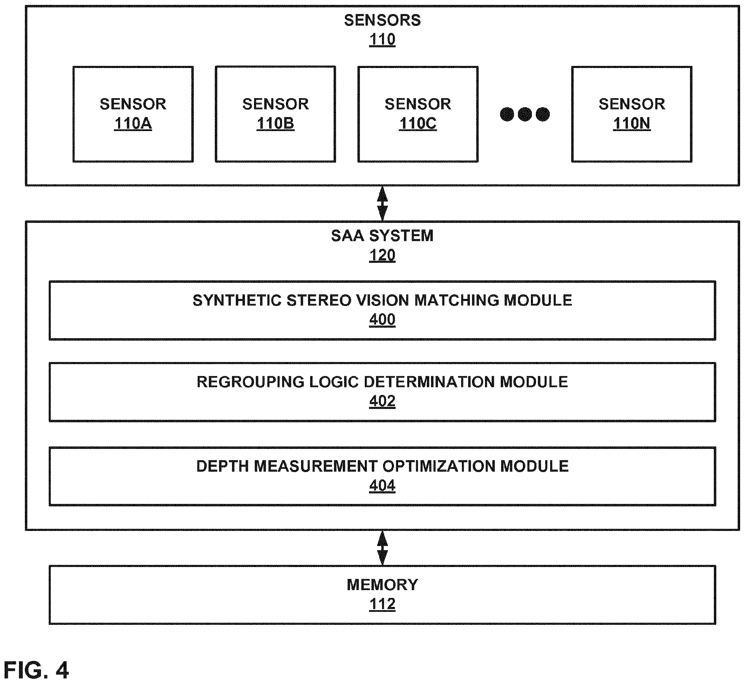

FIG. 4 is a block diagram illustrating an example SAA system 120 in accordance with a technique of this disclosure. SAA system 120 receives signals from sensors 110A through 110N (collectively, "sensors 110") and stores information to memory 112. In the example of FIG. 4, SAA system 120 comprises a synthetic stereo vision matching module (SSVMM) 400, a regrouping logic determination module (RLDM) 402, and a depth measurement optimization module (DPOM) 404. Any number of sensors 110 can be used as inputs to SSVMM 400, RLDM 402, and DPOM 404.

In the example of FIG. 4, SSVMM 400 collects the first and second images of an object, where the first and second images are captured at the same time. Additionally, SSVMM 400 identifies environmental parameters for a prioritized specific region to check if the region is adaptive for stereo matching. In other words, SSVMM 400 may determine whether the region has obvious features to identify the differences between two images. The prioritized specific region may be a region or area containing an object whose 3-dimensional position SAA system 120 is determining. In one example, when a value of an environment parameter is higher than a specific threshold, SSVMM 400 may take object perception as primary channels for stereo matching. In other words, SSVMM 400 may determine that stereo matching is better for calculating the depth of, and hence distance to, an object. In this example, when the environment parameter is lower than a specific threshold, SAA system 120 may generate environment triggers to determine which sensors to use as secondary channels for stereo matching.

Furthermore, in this example of FIG. 4, regrouping logic determination module (RLDM) 402 may determine the best combination based on values of environmental parameters (e.g., RLDM 402 may sort or rank the sensor groups (i.e., combinations of sensors), may initiate a working pattern of selected sensors for better depth measurement, and may enable each sensor with self-intelligence, thereby potentially creating more channels of depth measurement. Additionally, RLDM 402 may manage sensor selection logic to avoid unnecessary power consumption. As part of performing these functions, RLDM 402 may determine confidence values for sensor groups and use the confidence values for the sensor groups to determine whether to enable or disable particular sensors 110. For instance, RLDM 402 may determine, based on the confidence values for given values of environmental parameters, a working pattern of enabled and disabled sensors 110.

In the example of FIG. 4, depth measurement optimization module (DPOM) 404 receives depth information from regrouped channels with mapped confidence for specific regions, creates the optimized depth measurement through sensor fusion for better sensing accuracy. For instance, RLDM 402 may determine a depth value or 3-dimensional position of an object based on depth values and confidence values, as described elsewhere in this disclosure. Furthermore, in some examples, DPOM 404 may predict a motion model for an object. In some examples, DPOM 404 may dynamically determine or adjust camera parameters of one or more cameras of vehicle 100 in order to achieve more accurate depth measurement (e.g., by using the camera parameters to correct lens distortion in images generated by cameras prior to use of images from the cameras for determining a depth on an object; by using the camera parameters directly to determine a depth on an object based on an image from a single camera; or, by automatically adjusting an aperture or exposure time to improve the lighting in the image).

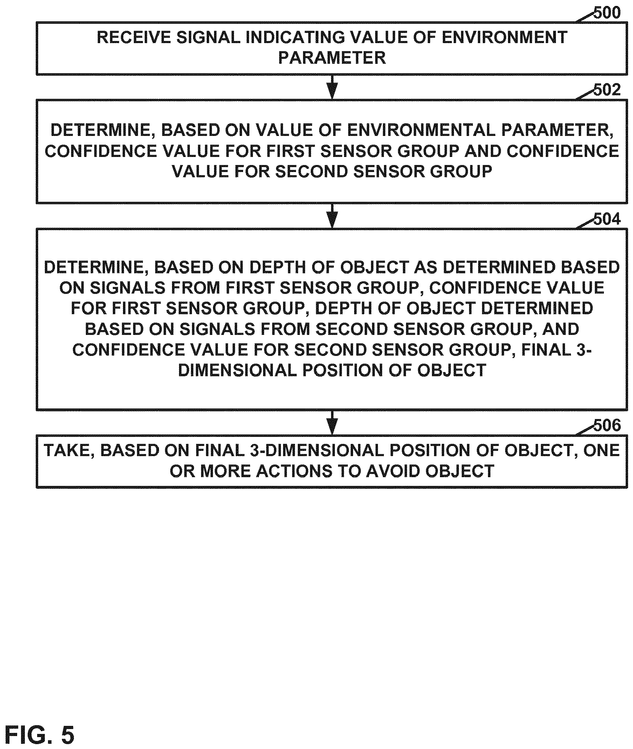

FIG. 5 is a flowchart illustrating an example operation of an SAA module of the vehicle, in accordance with one or more techniques of this disclosure. Although the operation of FIG. 5 is described with reference to FIG. 1, the techniques of this disclosure are not limited to the example of FIG. 1.

In the example of FIG. 5, SAA system 120 (FIG. 1) of vehicle 100 receives a signal indicating a value of an environmental parameter (500). The environmental parameter is a measure of an environmental condition of a field of view of vehicle 100. For instance, the environmental parameter may be a level of ambient light in the region, a contrast ratio in the region, etc.

Furthermore, in the example of FIG. 5, SAA system 120 determines, based on the value of the environmental parameter, a confidence value for a first sensor group (e.g., sensor group 122) and a confidence value for a second sensor group (e.g., sensor group 124) (502). As previously discussed, vehicle 100 has a plurality of sensors 110. The first sensor group is a group of one or more of sensors 110 of vehicle 100 and the second sensor group is a different group of one or more of sensors 110 of vehicle 100. SAA system 120 is configurable to determine depths (or 3-dimensional locations) of objects based on signals from the first sensor group and is also configurable to determine the depths (or 3-dimensional locations) of the objects based on the signals from the second sensor group.

SAA system 120 determines, in the example of FIG. 5, based on a depth of an object determined based on signals from the first sensor group, the confidence value for the first sensor group, a depth of the object determined based on signals from the second sensor group, and the confidence value for the second sensor group, a final 3-dimensional position of the object (504). For example, SAA system 120 may determine a 3-dimension position of the object based on the signals from the first sensor group; SAA system 120 may also determine a 3-dimensional position of the object based on the signals from the second sensor group. SAA system 120 may then determine the final 3-dimensional position of the object as a weighted average of the two determined 3-dimensional positions of the object. In some examples, the weighting for a sensor group may be zero, meaning that the SAA system 120 does not, in effect, use the signals from the sensor group in determining the final 3-dimensional position of the object. In this way, as part of determining the final 3-dimensional position of the object, SAA system 120 may determine, based on the depth of the object determined based on the signals from the first sensor group, a first 3-dimensional position of the object. Additionally, in this example, SAA system 120 may determine, based on the depth of the object determined based on the signals from the second sensor group, a second 3-dimensional position of the object. Furthermore, in this example, SAA system 120 may determine the final 3-dimensional position of the object as a weighted average of the first 3-dimensional position of the object and the second 3-dimensional position of the object, weighted according to the confidence value of the first sensor group and the confidence value of the second sensor group. In some examples, the final 3-dimensional position of the object is a position relative to vehicle 100. In some examples, the final 3-dimensional position of the object is defined with respect to a reference point other than vehicle 100.

In another example, SAA system 120 may determine a depth of the object based on the signals from the first sensor group; SAA system 120 may also determine a depth of the object based on the signals from the second sensor group. SAA system 120 may then determine a final depth of the object as a weighted average of the two determined depths of the object. In this example, SAA system 120 may then use the final depth, along with one or more images, to determine the final 3-dimensional position of the object. In this way, as part of determining the final 3-dimensional position of the object, SAA system 120 may determine, based on the depth of the object determined based on the signals from the first sensor group, a first depth of the object. Additionally, SAA system 120 may determine, based on the depth of the object determined based on the signals from the second sensor group, a second depth of the object. Furthermore, SAA system 120 may determine a final depth of the object as a weighted average of the first depth of the object and the second depth of the object, weighted according to the confidence value of the first sensor group and the confidence value of the second sensor group. SAA system 120 may determine the final 3-dimensional position of the object based on the final depth of the object.

Vehicle 100 may take, based on the final 3-dimensional position of the object, one or more actions to avoid the object (506). For example, SAA system 120 may determine a travel path that avoids the final 3-dimensional position of the object. In this example, SAA system 120 may (e.g., in coordination with navigation system 118) control drive equipment 102 such that vehicle 100 follows the travel path. In some examples, SAA system 120 may determine, based on a series of final 3-dimensional positions of the object determined in the manner described above, a travel path of the object and determine the travel path of vehicle 100 such that the object and vehicle 100 are not in the same place at the same time. In other examples, as part of taking one or more actions to avoid the object, vehicle 100 may generate an alert indicating an object potentially presents a collision hazard to vehicle 100. In response to the alert, an operator of vehicle 100 can alter the travel path of vehicle 100.

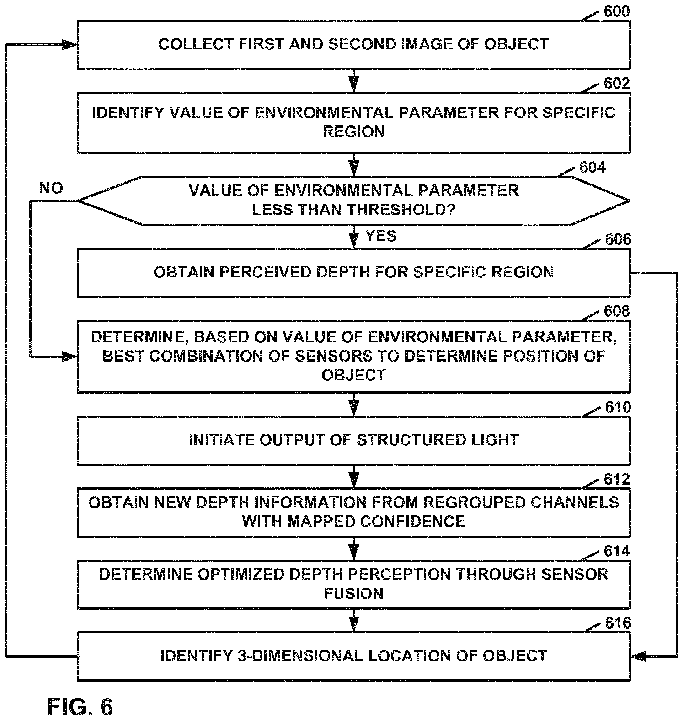

FIG. 6 is a flowchart illustrating an example process for sensor selection for intelligent object depth measurement, in accordance with a technique of this disclosure. In the example of FIG. 6, RLDM 402 may collect (e.g., from cameras, such as RGB camera 202 and RGB camera 206, or from memory), a first image of an object and a second image of an object (600). Additionally, in the example of FIG. 6, RLDM 402 may identify a value of an environmental parameter for a specific region (602). The region is an area of the images in which the object is depicted. It should be noted that different regions of the images may have different values for the environmental parameter. For example, the object may be located in parts of the images that are in deep shadow, have a complex background, or the object may be in a region of the pictures where the object has low contrast with its background. However, in this example, other regions of the images may be in full light, have simple backgrounds, would have high contrast with the object. In this example, the environmental parameter may be light level, a background complexity level, or a contrast level.

In the example of FIG. 6, RLDM 402 determines whether the value of the environmental parameter is less than a threshold (604). The threshold may be a predetermined value. There may be different thresholds for different environmental parameters. In the example of FIG. 6, the value of the environmental parameter being below the threshold is correlated with increased difficulty in accurately determining the depth or 3-dimensional position of the object based on the first and second images captured by the cameras.

In response to determining that the value of the environmental parameter is less than the threshold ("NO" branch of 604), RLDM 402 may obtain the perceived depth for the specific region based on the first image and second image of the object (604). For instance, RLDM 402 may determine the perceived depth for the specific region, obtain the perceived depth for the specific region from SSVMM 400, or otherwise obtain the perceived depth for the specific region. The first image and the second image may be generated by cameras or other sensors.

On the other hand, in response to determining that the value of the environmental parameter is not less than the threshold ("YES" branch of 604), RLDM 402 may determine, based on the value of the environmental parameter, the best combination of sensors 110 for determining the 3-dimensional position of the object (606). In the example of FIG. 6, it is assumed that the best combination of sensors includes a sensor, such as IR camera 204 (FIG. 2), that detects structured light. For instance, the best combination of sensors 110 may be RGB camera 202 and IR camera 204, or RGB camera 206 and IR camera 204. In this way, RLDM 402 may regroup the channels for sensors 110 such that a depth of the object is determined based on channels from a different set of sensors instead of the channels for the cameras.

Accordingly, after determining the best combination of sensors 110 for determining the 3-dimensional position of the object, RLDM 402 may initiate output of structured light with an adapted structure pattern (610). RLDM 402 may adapt the pattern of the structured light based on values of environmental parameters. For instance, different the patterns may include parallel vertical lines, parallel horizontal lines, crossed lines, light with different polarization, light with different frequencies, etc. RLDM 402 may then obtain depth information from the regrouped channels with mapped confidence values (612). RLDM 402 may determine a depth of an object based on the time it takes for structured light with the adapted structure pattern to be detected by a structured light detector, such as IR camera 204.

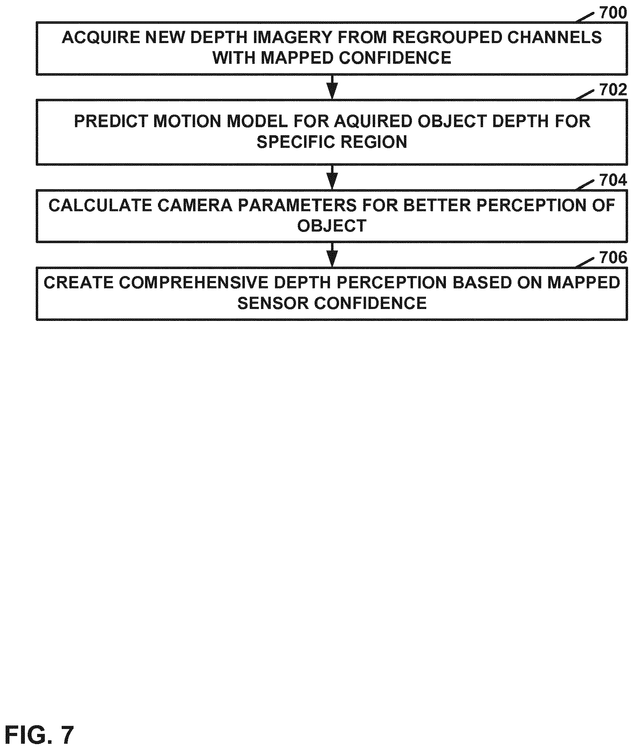

In the example of FIG. 6, DPOM 404 then determines an optimized depth value for the object through sensor fusion (614). For example, DPOM 404 may determine, based on a depth of an object determined based on signals from a first sensor group (e.g., the pair of cameras) weighted according to the confidence value for the first sensor group and a depth of the object determined based on signals from a second sensor group (e.g., an RGB camera and an IR camera) weighted according to the confidence value for the second sensor group, a final optimized depth of the object. As described with regard to FIG. 7, DPOM 404 may also calculate camera parameters for better perception of the object.

Additionally, after obtaining the perceived depth in (606) or after determining the optimized depth value for the object through sensor fusion in (614), DPOM 404 may identify the 3-dimensional location of the object (616). For example, DPOM 404 may determine an angle based on the horizontal distance in an image between a vertical midline of the image and the position of the object. In this example, DPOM 404 may then use trigonometry to determine, based on the depth of the object and the determined angle, the actual horizontal distance between the camera and the object. In some examples, the actual horizontal distance is the x-coordinate of the object. In some examples, DPOM 404 may then modify the actual horizontal distance based on information regarding the position of vehicle 100 to determine an x-coordinate of the object. In this example, DPOM 404 may perform a similar process to determine the y-coordinate of the object. In this way, the 3-dimensional location of the object may be determined based on a depth of an object determined based on signals from the first sensor group, the confidence value for the first sensor group, a depth of the object determined based on signals from the second sensor group, and the confidence value for the second sensor group.

FIG. 7 is a flowchart illustrating an example process for object depth measurement optimization, in accordance with a technique of this disclosure. The actions in FIG. 7 may be performed as part of performing action 614 of FIG. 6.

In the example of FIG. 7, DPOM 404 (FIG. 4) may acquire new depth imagery from regrouped channels with mapped confidence values (700). For example, as discussed above, RLDM 402 may determine, based on values of one or more environmental parameters, confidence values for sensor groups. Additionally, RLDM 402 may determine, based on the confidence values for the sensor groups, a current group of enabled sensor groups, thereby regrouping the set of enabled sensor groups. A sensor group is an enabled sensor group if each sensor of the sensor group is enabled. Additionally, in this example, SSVMM 400 may determine depth images based on signals from sensors in enabled sensor groups. DPOM 404 may obtain the depth images generated by SSVMM 400 and the corresponding confidence values from RLDM 402, thereby acquiring depth imagery from regrouped channels with mapped confidence values.

Additionally, in the example of FIG. 7, DPOM 404 may predict a motion model for an acquired object depth for a specific region (702). For example, DPOM 404 may determine, based on a series of depth images occurring over time, a motion model for an object. The motion model for the object may indicate a direction of motion of the object.

Furthermore, DPOM 404 may calculate camera parameters for better perception of the object (704). For instance, the camera parameters may include intrinsic camera parameters, extrinsic camera parameters, accuracy of estimation parameters, and calibration settings. Intrinsic camera parameters may include an intrinsic matrix (which is based on a focal length, an image sensor format, and a principle point), skew, radial distortion, and tangential distortion. Extrinsic camera parameters may include rotation matrices and translation vectors. The calibration settings may include a number of patterns, a matrix of world points, world units, a skew estimate, a number of radial distortion coefficients, and an estimated tangential distortion. A variety of algorithms are known for calculating the camera parameters for a camera, including the direct linear transformation method, Zhang's method, and Tsai's method. Based on the camera parameters, DPOM 404 may modify images to remove lens distortion, determine the size of an object in world units, or determine the location of an object in a scene according to techniques well-known in the art. Thus, based on the camera parameters, DPOM 404 may be able to determine a depth or a 3-dimensional location of an object based on an image from a single camera. Thus, in one example, the plurality of sensors 110 may include a camera and a sensor group includes the camera. In this example, DPOM 404 may determine, based on camera parameters of the camera, the depth of the object determined based on the signals from the first sensor group.

DPOM 404 may then create a comprehensive depth measurement based on mapped sensor confidence values (706). For example, DPOM 404 may determine a final depth value for the object based on an average of depth values from one or more sensor groups, weighted according to the confidence values of the sensor groups. The depth of the object determined based on the camera for the object in the manner described elsewhere in this disclosure.

Although FIGS. 5-7 have been described with respect to a single environmental parameter, the techniques of FIGS. 5-7 may also be implemented using multiple parameters. Referring to box 604 of FIG. 6, for example, the value compared to the threshold may be a value determined based off multiple parameters instead of a value based on a single environmental parameter. In other examples, the value may be determined based on a single environmental parameter, but the threshold to which the value is compared may vary as a function of a different environmental parameter. As one example, contrast ratio and brightness may have an inverse relationship such that the confidence value for a particular sensor group may still be relatively high in a low brightness environment as long as a contrast ratio is adequately high, or such that the confidence value for a particular sensor group may still be relatively high if an image has a low contrast ratio as long as the brightness of environment is at a desirable level.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units.

Various examples have been described. These and other examples are within the scope of the following claims.

## Claims

**1.** A method for a vehicle to sense and avoid objects, the method comprising:

receiving, by a sense and avoid (SAA) system of a vehicle, a signal indicating a value of an environmental parameter, the environmental parameter being a measure of an environmental condition within a field of view of the vehicle;

determining, by the SAA system, based on the value of the environmental parameter, a confidence value for a first sensor group and a confidence value for a second sensor group, wherein the vehicle has a plurality of sensors, the first sensor group is a group of one or more of the sensors of the vehicle, the second sensor group is a different group of one or more of the sensors of the vehicle, and the SAA system is configurable to determine a depth of an object based on signals from the first sensor group and is also configurable to determine the depth of the object based on signals from the second sensor group;

determining, by the SAA system, based on the depth of the object determined based on the signals from the first sensor group, the confidence value for the first sensor group, the depth of the object determined based on the signals from the second sensor group, and the confidence value for the second sensor group, a final 3-dimensional position of the object; and

taking, by the vehicle, based on the final 3-dimensional position of the object, one or more actions to avoid the object.

**2.** The method of claim 1, further comprising, after determining the 3-dimensional position of the object, receiving, by the SAA system, a signal indicating a second value of the environmental parameter;

determining, by the SAA system, based on the second value of the environmental parameter, a second confidence value for the first sensor group and a second confidence value for the second sensor group;

at least one of:

based on the second confidence value for the first sensor group being below a first threshold:

disabling the first sensor group; and
determining, by the SAA system, without using any signals from the first sensor group, a 3-dimensional position of a second object; and

based on the second confidence value for the second sensor group being below a second threshold:

disabling the second sensor group; and
determining, by the SAA system, without using any signals from the second sensor group, the 3-dimensional position of the second object.

3. The method of claim 1, further comprising, after determining the 3-dimensional position of the object, receiving, by the SAA system, a signal indicating a second value of the environmental parameter; determining, by the SAA system, based on the second value of the environmental parameter, a second confidence value for the first sensor group and a second confidence value for the second sensor group; at least one of:

based on the second confidence value for the first sensor group being above a first threshold:

disabling the second sensor group; and
determining, by the SAA system, based on second signals from the first sensor group and without using any signals from the second sensor group, a 3-dimensional position of a second object; and

based on the second confidence value for the second sensor group being above a second threshold:

disabling the first sensor group; and
determining, by the SAA system, based on second signals from the second sensor group and without using any signals from the first sensor group, the 3-dimensional position of the second object.

4. The method of claim 1, wherein determining the final 3-dimensional position of the object comprises:

determining, based on the depth of the object determined based on the signals from the first sensor group, a first 3-dimensional position of the object;
determining, based on the depth of the object determined based on the signals from the second sensor group, a second 3-dimensional position of the object; and
determining the final 3-dimensional position of the object as a weighted average of the first 3-dimensional position of the object and the second 3-dimensional position of the object, weighted according to the confidence value of the first sensor group and the confidence value of the second sensor group.

5. The method of claim 1, wherein determining the final 3-dimensional position of the object comprises:

determining, based on the depth of the object determined based on the signals from the first sensor group, a first depth of the object;
determining, based on the depth of the object determined based on the signals from the second sensor group, a second depth of the object;
determining a final depth of the object as a weighted average of the first depth of the object and the second depth of the object, weighted according to the confidence value of the first sensor group and the confidence value of the second sensor group; and
determining the final 3-dimensional position of the object based on the final depth of the object.

6. The method of claim 1, wherein the environmental parameter is a brightness, contrast ratio, or visibility of the region.

7. The method of claim 1, wherein the plurality of sensors includes a camera, the first sensor group includes the camera, and the method further comprises determining, based on camera parameters of the camera, the depth of the object determined based on the signals from the first sensor group.

8. A system comprising:
one or more processors configured to provide a sense and avoid (SAA) system for a vehicle, the SAA system configured to:

receive a signal indicating a value of an environmental parameter, the environmental parameter being a measure of an environmental condition within a field of view of the vehicle;

determine, based on the value of the environmental parameter, a confidence value for a first sensor group and a confidence value for a second sensor group, wherein the vehicle has a plurality of sensors, the first sensor group is a group of one or more of the sensors of the vehicle and a second sensor group is a different group of one or more of the sensors of the vehicle, and the SAA system is configurable to determine a depth of an object based on signals from the first sensor group and is also configurable to determine the depth of the object based on signals from the second sensor group;

determine, based on the depth of the object determined based on the signals from the first sensor group, the confidence value for the first sensor group, the depth of the object determined based on the signals from the second sensor group, and the confidence value for the second sensor group, a final 3-dimensional position of the object; and

take, based on the final 3-dimensional position of the object, one or more actions to help the vehicle to avoid the object.

9. The system of claim 8, wherein the SAA system is further configured such that, after determining the final 3-dimensional position of the object, the SAA system:

receives a signal indicating a second value of the environmental parameter;

determines, based on the second value of the environmental parameter, a second confidence value for the first sensor group and a second confidence value for the second sensor group;

at least one of:

based on the second confidence value for the first sensor group being below a first threshold:

disables the first sensor group; and
determines, without using any signals from the first sensor group, a 3-dimensional position of a second object; and

based on the second confidence value for the second sensor group being below a second threshold:

disables the second sensor group; and
determines, without using any signals from the second sensor group, the 3-dimensional position of the second object.

10. The system of claim 8, wherein the SAA system is further configured such that, after determining the final 3-dimensional position of the object, the SAA system:

receives a signal indicating a second value of the environmental parameter;

determines, based on the second value of the environmental parameter, a second confidence value for the first sensor group and a second confidence value for the second sensor group;

at least one of:

based on the second confidence value for the first sensor group being above a first threshold:

disables the second sensor group; and
determines, based on second signals from the first sensor group and without using any signals from the second sensor group, a 3-dimensional position of a second object; and

based on the second confidence value for the second sensor group being above a second threshold:

disables the first sensor group; and
determines, based on second signals from the second sensor group and without using any signals from the first sensor group, the 3-dimensional position of the second object.

11. The system of claim 8, wherein the SAA system is configured such that, as part of determining the final 3-dimensional position of the object, the SAA system:

determines, based on the depth of the object determined based on the signals from the first sensor group, a first 3-dimensional position of the object;

determines, based on the depth of the object determined based on the signals from the second sensor group, a second 3-dimensional position of the object; and

determines the final 3-dimensional position of the object as a weighted average of the first 3-dimensional position of the object and the second 3-dimensional position of the object, weighted according to the confidence value of the first sensor group and the confidence value of the second sensor group.

12. The system of claim 8, wherein the SAA system is configured such that, as part of determining the final 3-dimensional position of the object, the SAA system:

determines, based on the depth of the object determined based on the signals from the first sensor group, a first depth of the object;

determines, based on the depth of the object determined based on the signals from the second sensor group, a second depth of the object;

determines a final depth of the object as a weighted average of the first depth of the object and the second depth of the object, weighted according to the confidence value of the first sensor group and the confidence value of the second sensor group; and

determines the final 3-dimensional position of the object based on the final depth of the object.

13. The system of claim 8, wherein the environmental parameter is a brightness or contrast ratio of the region.

14. The system of claim 8, wherein the plurality of sensors includes a camera, the first sensor group includes the camera, and the SAA system is further configured to determine, based on camera parameters of the camera, the depth of the object determined based on the signals from the first sensor group.

15. The system of claim 8, wherein the vehicle is an unmanned aerial vehicle.

FIG. 1

FIG. 2

EP 3 531 224 A1

P=(Xp,Yp,Zp)
300
XL1
Z
XL2
308
IL
310
IR
f
302
f
L1
L1
304
306

FIG. 3

FIG. 4

```
                                                                      500
┌──────────────────────────────────────────────────────────────────┐
│         RECEIVE SIGNAL INDICATING VALUE OF ENVIRONMENT             │
│                          PARAMETER                                 │
└──────────────────────────────────────────────────────────────────┘
                                │
                                ▼                                     502
┌──────────────────────────────────────────────────────────────────┐
│    DETERMINE, BASED ON VALUE OF ENVIRONMENTAL PARAMETER,          │
│   CONFIDENCE VALUE FOR FIRST SENSOR GROUP AND CONFIDENCE          │
│              VALUE FOR SECOND SENSOR GROUP                         │
└──────────────────────────────────────────────────────────────────┘
                                │
                                ▼                                     504
┌──────────────────────────────────────────────────────────────────┐
│   DETERMINE, BASED ON DEPTH OF OBJECT AS DETERMINED BASED         │
│    ON SIGNALS FROM FIRST SENSOR GROUP, CONFIDENCE VALUE           │
│     FOR FIRST SENSOR GROUP, DEPTH OF OBJECT DETERMINED            │
│      BASED ON SIGNALS FROM SECOND SENSOR GROUP, AND               │
│    CONFIDENCE VALUE FOR SECOND SENSOR GROUP, FINAL 3-             │
│              DIMENSIONAL POSITION OF OBJECT                        │
└──────────────────────────────────────────────────────────────────┘
                                │
                                ▼                                     506
┌──────────────────────────────────────────────────────────────────┐
│  TAKE, BASED ON FINAL 3-DIMENSIONAL POSITION OF OBJECT, ONE       │
│            OR MORE ACTIONS TO AVOID OBJECT                         │
└──────────────────────────────────────────────────────────────────┘
```

# FIG. 5

```
                                                              ┌── 600
COLLECT FIRST AND SECOND IMAGE OF OBJECT

                                                              ┌── 602
IDENTIFY VALUE OF ENVIRONMENTAL PARAMETER FOR SPECIFIC
                        REGION

                                                              ┌── 604
        VALUE OF ENVIRONMENTAL PARAMETER
NO          LESS THAN THRESHOLD?

                       YES                                    ┌── 606
OBTAIN PERCEIVED DEPTH FOR SPECIFIC REGION

                                                              ┌── 608
DETERMINE, BASED ON VALUE OF ENVIRONMENTAL PARAMETER,
BEST COMBINATION OF SENSORS TO DETERMINE POSITION OF
                       OBJECT

                                                              ┌── 610
INITIATE OUTPUT OF STRUCTURED LIGHT

                                                              ┌── 612
OBTAIN NEW DEPTH INFORMATION FROM REGROUPED CHANNELS
                WITH MAPPED CONFIDENCE

                                                              ┌── 614
DETERMINE OPTIMIZED DEPTH PERCEPTION THROUGH SENSOR
                        FUSION

                                                              ┌── 616
IDENTIFY 3-DIMENSIONAL LOCATION OF OBJECT
```

**FIG. 6**

```
                                                              ┌─ 700
┌─────────────────────────────────────────────────────────┐
│  ACQUIRE NEW DEPTH IMAGERY FROM REGROUPED CHANNELS      │
│                WITH MAPPED CONFIDENCE                     │
└─────────────────────────────────────────────────────────┘
                            │
                            ▼                                 ┌─ 702
┌─────────────────────────────────────────────────────────┐
│     PREDICT MOTION MODEL FOR AQUIRED OBJECT DEPTH FOR    │
│                   SPECIFIC REGION                         │
└─────────────────────────────────────────────────────────┘
                            │
                            ▼                                 ┌─ 704
┌─────────────────────────────────────────────────────────┐
│   CALCULATE CAMERA PARAMETERS FOR BETTER PERCEPTION OF   │
│                      OBJECT                               │
└─────────────────────────────────────────────────────────┘
                            │
                            ▼                                 ┌─ 706
┌─────────────────────────────────────────────────────────┐
│  CREATE COMPREHENSIVE DEPTH PERCEPTION BASED ON MAPPED   │
│                 SENSOR CONFIDENCE                         │
└─────────────────────────────────────────────────────────┘
```

FIG. 7

Europäisches
Patentamt

European
Patent Office

Office européen
des brevets

# EUROPEAN SEARCH REPORT

Application Number

EP 19 15 4633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/063651 A1 (ANDERSON NOEL WAYNE [US]) 11 March 2010 (2010-03-11) | 1-3, 7-10, 13-15 | INV. G05D1/10 B64C39/02 |
| Y | * paragraphs [0030], [0055], [0060], [0062], [0069], [0071] - [0076]; figures 3, 5, 8, 9 * | 4-6,11, 12 | |
| Y | US 2010/063626 A1 (ANDERSON NOEL WAYNE [US]) 11 March 2010 (2010-03-11) * paragraph [0117] * | 4-6,11, 12 | |
| A | GAGEIK NILS ET AL: "Obstacle Detection and Collision Avoidance for a UAV With Complementary Low-Cost Sensors", IEEE ACCESS, vol. 3, 1 June 2015 (2015-06-01), pages 599-609, XP011582740, DOI: 10.1109/ACCESS.2015.2432455 [retrieved on 2015-05-28] * pages 599-602 * | 1-15 | |
| A | C. GIANNÌ ET AL: "OBSTACLE DETECTION SYSTEM INVOLVING FUSION OF MULTIPLE SENSOR TECHNOLOGIES", ISPRS - INTERNATIONAL ARCHIVES OF THE PHOTOGRAMMETRY, REMOTE SENSING AND SPATIAL INFORMATION SCIENCES, vol. XLII-2/W6, 23 August 2017 (2017-08-23), pages 127-134, XP055603155, DOI: 10.5194/isprs-archives-XLII-2-W6-127-2017 * pages 127-128 * | 1-15 | TECHNICAL FIELDS SEARCHED (IPC)<br><br>G05D<br>B64F<br>B64C |

The present search report has been drawn up for all claims

| Place of search | Date of completion of the search | Examiner |
|---|---|---|
| Munich | 8 July 2019 | Nicolaucig, Aldo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 15 4633

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2019

| Patent document cited in search report | Publication date | Patent family member(s) | | Publication date |
|---|---|---|---|---|
| US 2010063651 A1 | 11-03-2010 | EP | 2169499 A2 | 31-03-2010 |
|  |  | US | 2010063651 A1 | 11-03-2010 |
| US 2010063626 A1 | 11-03-2010 | EP | 2169505 A2 | 31-03-2010 |
|  |  | US | 2010063626 A1 | 11-03-2010 |

EPO FORM P0459

For more details about this annex : see Official Journal of the European Patent Office, No. 12/82